(19) Europäisches Patentamt
European Patent Office
Office européen des brevets

(11) **EP 1 804 227 A2**

(12) **EUROPEAN PATENT APPLICATION**

(43) Date of publication:
**04.07.2007 Bulletin 2007/27**

(51) Int Cl.:
***G08G 1/16*** (2006.01)

(21) Application number: **06126599.7**

(22) Date of filing: **20.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.12.2005 JP 2005372583**

(71) Applicant: **Aisin AW Co., Ltd.**
**Fujii-cho**
**Anjo**
**Aichi 444-1192 (JP)**

(72) Inventor: **Yamamoto, Yukio**
**Okazaki Aichi 444-8564 (JP)**

(74) Representative: **TBK-Patent**
**Bavariaring 4-6**
**80336 München (DE)**

(54) **Driving support apparatus, driving support system and driving support program**

(57) According to a driving support system of the present invention, other vehicle braking information relating to a braking operation of an other vehicle is generated by a navigation device of the other vehicle, and this information is output to a lamp control ECU, whereupon optical data generated by a brake lamp are transmitted to the exterior of the other vehicle. In a host vehicle, the other vehicle braking information output by the navigation device of the other vehicle is obtained, and on the basis thereof, host vehicle braking information relating to a braking operation of the host vehicle is generated and output to a display or a brake assist ECU. Thus, the future behavior of the other vehicle can be predicted to a certain extent on the basis of the other vehicle braking information relating to the braking operation of the other vehicle, and therefore the host vehicle braking information can be generated taking the predictable future behavior of the other vehicle into account. Hence, appropriate driving support can be provided.

FIG. 2

**EP 1 804 227 A2**

**Description**

The present invention relates to a driving support device, a driving support system, and a driving support program for assisting the driving of a host vehicle on the basis of information relating to another vehicle traveling in front of the host vehicle.

A conventional example of a device for controlling the traveling of a host vehicle on the basis of information relating to another vehicle traveling in front of the host vehicle is a "Vehicular Traveling Control Device" disclosed in Japanese Patent Application Publication JP-A-2003-104184. According to this related art, another vehicle traveling in front of the host vehicle is detected by detecting the speed (vehicle speed) of the other vehicle and the distance (inter-vehicle distance) between the other vehicle and the host vehicle as the information relating to the other vehicle using a vehicle speed sensor and a radar device, for example. When the other vehicle has been detected and a trigger switch is manipulated by a driver, a control computer deceleration-controls a brake actuator on the basis of the detection information detected by the radar device and the vehicle speed sensor, thereby enabling so-called auto-cruise control.

However, according to the "Vehicular Traveling Control Device" disclosed in Japanese Patent Application Publication JP-A-2003-104184, the information that can be obtained as information relating to the other vehicle is limited to information that can be detected at the present moment, such as the vehicle speed and inter-vehicle distance, and therefore, if the other vehicle traveling in front (the front vehicle) brakes suddenly, for example, traveling control of the host vehicle cannot always be performed appropriately. In other words, it is difficult to predict the future behavior of the front vehicle using only detection information obtained from detection devices such as a radar device and a vehicle speed sensor, and hence in conventional auto-cruise control, it is difficult to respond sufficiently to such sudden changes in the behavior of the front vehicle.

The present invention has been designed to solve this problem, and it is an object thereof to provide a driving support device, a driving support system, and a driving support program which enable appropriate driving support.

A first aspect of the present invention is structured such that other vehicle braking information relating to a braking operation of another vehicle traveling in front is obtained from the other vehicle by an other vehicle information obtaining device, current vehicle speed information relating to a host vehicle is obtained by a vehicle speed information obtaining device, and inter-vehicle distance information relating to the distance between the other vehicle and the host vehicle is obtained by an inter-vehicle distance information obtaining device. Host vehicle braking information relating to a braking operation of the host vehicle is then generated by a host vehicle braking information generating device on the basis of the other vehicle braking information, vehicle speed information, and inter-vehicle distance information, whereupon the generated host vehicle braking information is output to a predetermined output destination by an output control device. Thus, the host vehicle braking information relating to the braking operation of the host vehicle is generated on the basis of the other vehicle braking information relating to the braking operation of the other vehicle, in addition to the vehicle speed information of the other vehicle and the inter-vehicle distance information, and therefore, in comparison with a case in which the host vehicle braking information is generated on the basis of nothing more than detection information obtained from a detection device such as a radar device or a vehicle speed sensor, for example, more accurate braking information can be generated. In other words, the future behavior of the other vehicle can be predicted to a certain extent on the basis of the other vehicle braking information relating to the braking operation of the other vehicle, and therefore the host vehicle braking information can be generated taking the predictable future behavior of the other vehicle into account. Hence, appropriate driving support can be provided by the predetermined output destination on the basis of the host vehicle braking information.

A second aspect of the present invention is structured such that the predetermined output destination is a braking device capable of stopping the host vehicle on the basis of the host vehicle braking information. Therefore, the host vehicle can be stopped on the basis of the host vehicle braking information, which is generated taking the predictable future behavior of the other vehicle into account. Accordingly, appropriate braking control can be provided as one aspect of driving support.

A third aspect of the present invention is structured such that the predetermined output destination is a notifying device capable of generating and outputting, on the basis of the host vehicle braking information, notification information enabling a driver of the host vehicle to recognize the need to perform a braking operation. Therefore, the notification information enabling the driver of the host vehicle to recognize the need to perform a braking operation can be generated and output on the basis of the host vehicle braking information, which is generated taking the predictable future behavior of the other vehicle into account. Accordingly, the driver can be provided with appropriate notification information as one aspect of driving support.

A fourth aspect of the present invention is structured such that the output control device selects the output destination from among the braking device and the notifying device on the basis of information included in the host vehicle braking information, constituted by deceleration rate information regarding the rate at which the host vehicle decelerates, and stopping time information regarding a time required for the host vehicle to stop traveling from the beginning of the braking operation. Therefore, the output destination can be selected in accordance with the degree of temporal urgency. For example, when the length of time indicated by the stopping time information is equal to or greater than a predetermined time, the notifying device is selected as the output destination, and by notifying the driver of the host vehicle of the need to perform a braking operation, the braking operation can be deferred to the driver. On the other hand, when the length of time indicated by the stopping time information is less than the predetermined time, the braking device is selected as the output destination, and through the intervention of forcible braking control, contact with the other vehicle in front can be avoided even when there is not enough time for the driver of the host vehicle to perform a braking operation. Hence, appropriate driving support corresponding to the degree of urgency can be provided.

A fifth aspect of the present invention is structured such that the notifying device notifies the driver of at least one of information regarding an appropriate braking amount for stopping the host vehicle without contacting the other vehicle and information regarding a braking distance of the host vehicle when the appropriate braking amount is applied, this information serving as the notification information. Therefore, when the notifying device is selected as the output destination, the driver of the host vehicle can be informed of the appropriate braking amount and braking distance required at that time. From this information, the driver of the host vehicle can recognize the need to perform a braking operation, the appropriate braking amount at that time, and so on, and thus the driver can be provided with more accurate notification information.

A sixth aspect of the present invention is structured such that a first in-vehicle device including an other vehicle braking information generating device for generating other vehicle braking information relating to a braking operation of another vehicle, and an other vehicle information outputting device for outputting the other vehicle braking information to the exterior of the other vehicle, and a second in-vehicle device including an other vehicle braking information obtaining device for obtaining the other vehicle braking information output by the other vehicle information outputting device of the first in-vehicle device, a vehicle speed information obtaining device for obtaining current vehicle speed information relating to a host vehicle, an inter-vehicle distance information obtaining device for obtaining inter-vehicle distance information relating to a distance between the other vehicle and the host vehicle, a host vehicle braking information generating device for generating host vehicle braking information relating to a braking operation of the host vehicle on the basis of the other vehicle braking information, the vehicle speed information, and the inter-vehicle distance information, and an output control device for outputting the host vehicle braking information to a predetermined output destination, are provided as constitutional elements of a system. Thus, the other vehicle braking information relating to the braking operation of the other vehicle is generated in the first in-vehicle device and output to the exterior of the other vehicle. Meanwhile, in the second in-vehicle device, the other vehicle braking information output by the other vehicle information outputting device of the first in-vehicle device is obtained, and the host vehicle braking information relating to the braking information of the host vehicle is generated on the basis thereof. Thus, in comparison with a case in which host vehicle braking information is generated on the basis of nothing more than detection information obtained from a detection device such as a radar device or a vehicle speed sensor, for example, the host vehicle braking information relating to the braking operation of the host vehicle is generated on the basis of the other vehicle braking information in addition to the vehicle speed information of the other vehicle and the inter-vehicle distance information, and therefore more accurate braking information can be generated. In other words, the future behavior of the other vehicle can be predicted to a certain extent on the basis of the other vehicle braking information relating to the braking operation of the other vehicle, and therefore the host vehicle braking information can be generated taking the predictable future behavior of the other vehicle into account. Hence, appropriate driving support can be provided by the predetermined output destination of the system on the basis of the host vehicle braking information.

A seventh aspect of the present invention is structured such that a driving support program causes a computer to function as an other vehicle braking information obtaining device, a vehicle speed information obtaining device, an inter-vehicle distance information obtaining device, a host vehicle braking information generating device, and an output control device. Thus, the computer obtains, from another vehicle traveling in front, other vehicle braking information relating to a braking operation of the other vehicle through the other vehicle braking information obtaining device, obtains current vehicle speed information relating to a host vehicle through the vehicle speed information obtaining device, and obtains inter-vehicle distance information relating to the distance between the other vehicle and the host vehicle through the inter-vehicle distance information obtaining device. Meanwhile, host vehicle braking information relating to a braking operation of the host vehicle is generated by the host vehicle braking information generating device on the basis of the other vehicle braking information, vehicle speed information, and inter-vehicle distance information, and the generated host vehicle braking information is output to a predetermined output destination by the output control device. Hence, in the computer, the host vehicle braking information relating to the braking operation of the host vehicle is generated on the basis of the other vehicle braking information relating to the braking operation of the other vehicle, in addition to the vehicle speed information of the other vehicle and the inter-vehicle distance information, and therefore, in comparison with a case in which host vehicle braking information is generated on the basis of nothing more than detection information obtained from a detection device such as a radar device or a vehicle speed sensor, for example, more accurate braking information can be generated. In other words, the future behavior of the other vehicle can be predicted to a certain extent on the basis of the other vehicle braking information relating to the braking operation of the other vehicle, and therefore the host vehicle braking information can be generated taking the predictable future behavior of the other vehicle into account. Hence, appropriate driving support can be provided by the predetermined output destination of the computer on the basis of the host vehicle braking information.

FIG. 1 is an illustrative view showing an outline of a driving support system according to an embodiment of the present invention;

FIG. 2 is a block diagram showing a structural example of a navigation device and so on in another vehicle (front vehicle) constituting the driving support system;

FIG. 3 is a block diagram showing a structural example of a navigation device and so on in a host vehicle (rear vehicle) constituting the driving support system;

FIG. 4 is a flowchart showing the flow of navigation processing performed by the navigation devices shown in FIG. 2 and FIG. 3;

FIG. 5 is a flowchart showing the flow of other vehicle braking information provision processing performed by the navigation device of the other vehicle (front vehicle) shown in FIG. 2;

FIG. 6 is an illustrative view showing a braking distance calculation method taking the gradient into account;

FIG. 7 is a flowchart showing the flow of driving support processing performed by the navigation device of the host vehicle (rear vehicle) shown in FIG. 3; and

FIG. 8 is an illustrative view showing the content of output processing (5223) shown in FIG. 7.

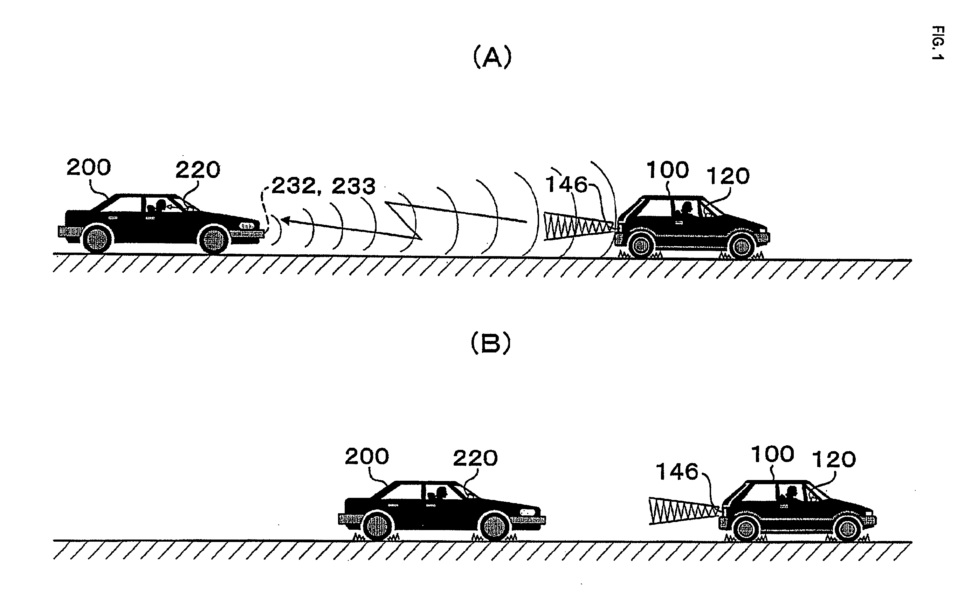

An embodiment of a driving support device, a driving support system, and a driving support program according to the present invention will be described below on the basis of the drawings. Note that here, a driving support system constituted by applying the driving support device of the present invention to a navigation device installed in a vehicle will be described as an embodiment of the driving support system according to the present invention. First, an outline of the structure of the driving support system will be described with reference to FIG. 1.

As shown in FIG. 1A, the driving support system is constituted by a front vehicle navigation device 120 installed in another vehicle 100 traveling in front of a host vehicle 200, and a rear vehicle navigation device 220 installed in the host vehicle 200. The structure and so on of these navigation devices 120, 220 will be described later, and the driving support system will be described in outline below. Note that the navigation device 120 may correspond to a "first in-vehicle device" of the claims, and the navigation device 220 may correspond to a "second in-vehicle device" of the claims.

The navigation device 120 installed in the other vehicle 100 generates other vehicle braking information relating to a braking operation of the other vehicle 100, and outputs this information to the exterior of the other vehicle 100, for example rearward via a brake lamp 146. Meanwhile, in the navigation device 220 installed in the host vehicle 200 traveling behind the other vehicle 100, the other vehicle braking information output by the navigation device 120 is obtained by a front camera 233 or the like, and inter-vehicle distance information regarding the distance between the host vehicle 200 and the other vehicle 100 and vehicle speed information relating to the host vehicle 200 are obtained from a millimeter wave radar 232 and a sensor control ECU. On the basis of this information, host vehicle braking information relating to a braking operation of the host vehicle 200 is generated.

Thus, in the host vehicle 200, the host vehicle braking information relating to the braking operation of the host vehicle 200 is generated on the basis of the other vehicle braking information obtained from the other vehicle 100 in addition to the vehicle speed information of the host vehicle 200 and the inter-vehicle distance information regarding the distance between the host vehicle 200 and the other vehicle 100, and therefore, in comparison with a case in which the host vehicle braking information is generated merely on the basis of detection information obtained from a detection device such as the millimeter wave radar 232 or a vehicle speed sensor, for example, more accurate host vehicle braking information can be generated. Therefore, when the other vehicle 100 traveling in front of the host vehicle 200 brakes suddenly, appropriate driving support can be provided to the driver or the like of the host vehicle 200 on the basis of the host vehicle braking information (FIG. 1A), and as a result, contact with the other vehicle 100 can be avoided reliably (FIG. 1B).

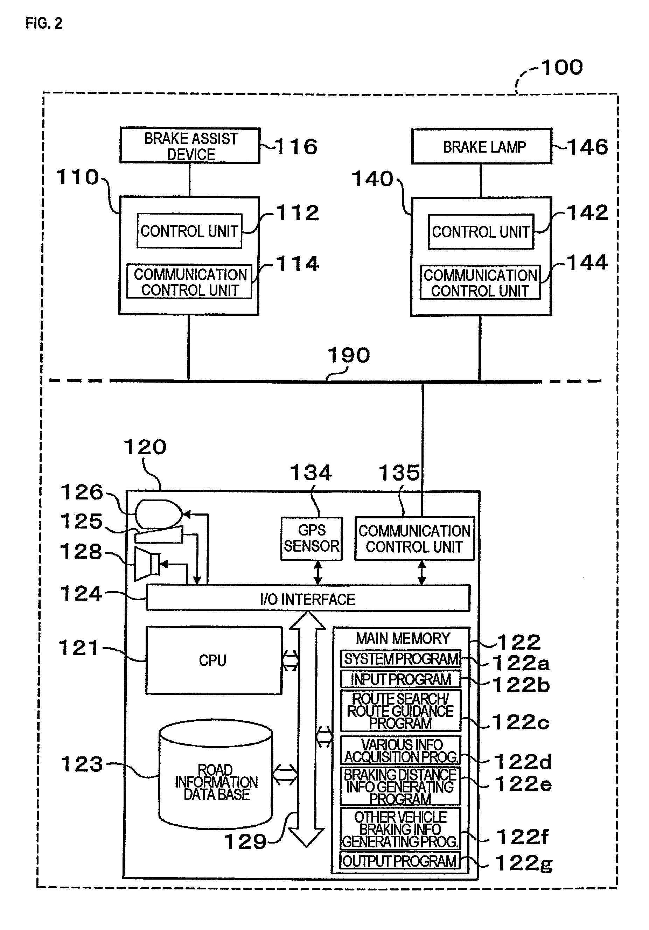

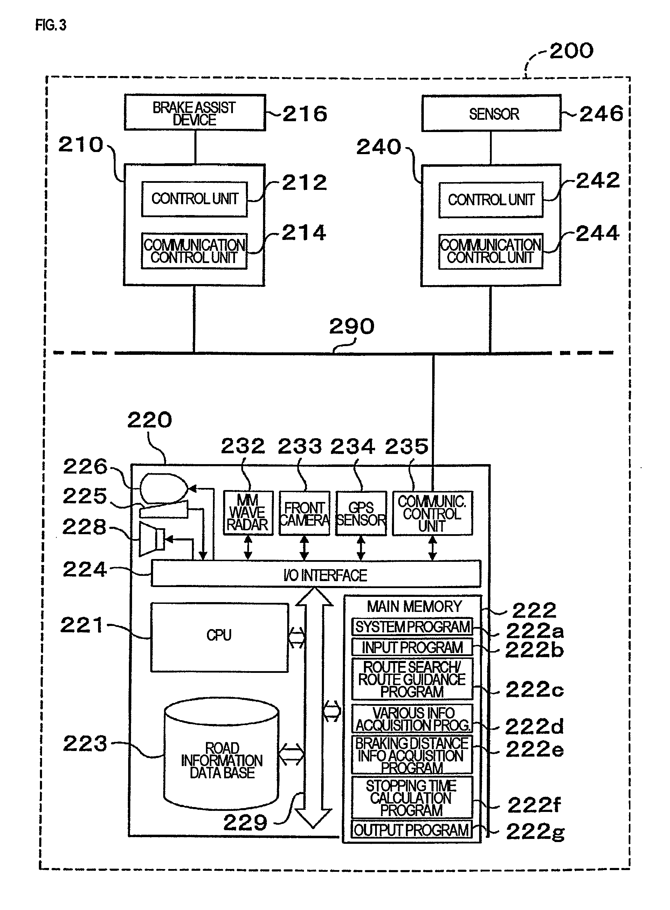

Next, the structure of the navigation device 120 and the navigation device 220 will be described with reference to FIG. 2 and FIG. 3.

As shown in FIG 2, the navigation device 120 installed in the other vehicle 100 is mainly constituted by a CPU 121, a main memory 122, a road information database 123, an input/output interface 124, an input device 125, a display 126, a sound source unit 128, a GPS sensor 134, a communication control unit 135, and so on. Note that in addition to the navigation device 120, FIG. 2 shows a brake assist ECU 110 and a lamp control ECU 140, which are connected to an in-vehicle LAN 190 via the communication control unit 135.

The navigation device 120 is structured to be capable of realizing the functions of a computer through the CPU 121, main memory 122, road information database 123, input/output interface 124, input device 125, display 126, and so on, and the hardware is structured in the following manner.

The CPU 121 is a central processing unit for controlling the navigation device 120, and is connected to the main memory 122, road information database 123, input/output interface 124, and so on via a system bus 129 (constituted by an address bus, a data bus, and so on). The main memory 122 stores a system program 122a for controlling the CPU 121, various control programs 122b to 122g, and so on. The CPU 121 reads these programs from the main memory 122 and executes them in sequence.

The main memory 122 is a semiconductor storage device connected to the system bus 129, and constitutes a main storage space (ROM, RAM, and so on) used by the CPU 121. Various program data and setting data etc. pertaining thereto for the system program 122a, an input program 122b, a route search/route guidance program 122c, a various information acquisition program 122d, a braking distance information generating program 122e, an other vehicle braking information generating program 122f, an output program 122g, and so on, are written into the main memory 122 in advance. Note that the CPU 121 and main memory 122 may correspond to an "other vehicle braking information generating device" and an "other vehicle information output device" of the claims.

The road information database 123 is an information storage medium (road information storage device) such as a hard disk, a compact disk, or a digital versatile disk constituting an auxiliary storage space used by the CPU 121, and is connected to the CPU 121 via the system bus 129. The road information database 123 stores road information such as map data and road data used for route search/route guidance, to be described below, and to generate the other vehicle braking information. Here, the "road data" include various data relating to topographic features such as roads and rivers, road links (numbers, link lengths, link turning angles, gradient values, etc.), nodes (numbers, coordinates, etc.), and so on.

The input/output interface 124 is a device for mediating data exchange between an input device such as the input device 125, the display 126, the sound source unit 128, the GPS sensor 134, and the communication control unit 135, and the CPU 121 and so on, and is connected to the system bus 129.

The input device 125 is an input device provided on an operating panel of the navigation device 120, and is connected to the system bus 129 via the input/output interface 124. The input device 125 inputs data relating to a destination, an origin, and so on of a journey for which the driver or passenger of the other vehicle 100 requires route guidance via the input program 122b.

The display 126 is a display device that is capable of outputting a guided route from the origin to the destination, travel information relating to the route along which the vehicle is currently traveling, and so on via the output program 122g, and is provided on the operating panel of the navigation device 120. The display 126 is also connected to the system bus 129 via the input/output interface 124, and is constituted by a liquid crystal display or the like.

The sound source unit 128 is capable of converting a digital signal based on predetermined sound information into an analog signal, and then generating audible sound from the analog signal and outputting the audible sound through a speaker via an amplifier. The sound source unit 128 is connected to the system bus 129 via the input/output interface 124. Thus, spoken route guidance or the like is output through the speaker and provided to the driver and passenger.

The GPS sensor 134 is used to output current vehicle position information according to longitude/latitude, and is connected to the system bus 129 via the input/output interface 124. The GPS sensor 134 is constituted by a GPS receiver or the like which receives signals from a plurality of GPS satellites and measures the absolute position of the vehicle.

The communication control unit 135 is a LAN controller that can be connected to the in-vehicle LAN 190, such as a CAN (Controller Area Network) or LIN (Local Interconnect Network), and is connected to the system bus 129 via the input/output interface 124. The communication control unit 135 enables data communication between the CPU 121 and the brake assist ECU 110, the lamp control ECU 140, or a sensor ECU, not shown in the drawing, via the in-vehicle LAN 190. Note that the communication control unit 135 may correspond to the "other vehicle information outputting device" of the claims.

The brake assist ECU 110 connected to the in-vehicle LAN 190 is mainly constituted by a control unit 112 and a communication control unit 114, and is capable of controlling a brake assist device 116 and an engine control device, not shown in the drawing, that are connected thereto. For example, the brake assist device 116 is a device for increasing the braking force by supplementing the brake depression force (brake pressure) when a strong braking force is required during emergency braking or the like, while the engine control device is a device which is capable of controlling engine acceleration and deceleration by controlling the opening of a throttle valve and the fuel injection amount injected through a fuel injection valve to adjust the air-fuel ratio of air and fuel supplied to cylinders in the engine. The brake assist 110 is capable of transmitting information regarding the brake pressure and acceleration/deceleration information to the navigation device 120, and receiving brake control information transmitted from another device such as the navigation device 120.

The lamp control ECU 140 connected to the in-vehicle LAN 190 is also mainly constituted by a control unit 142 and a communication control unit 144, and is capable of illuminating and extinguishing the brake lamp 146 connected thereto. The brake lamp 146 according to this embodiment is capable of transmitting optical data toward the rear of the other vehicle 100 using illumination light as a transmission medium, and is therefore capable of transmitting the other vehicle braking information transmitted from the navigation device 120 toward the rear vehicle through optical data transmission, for example. For this purpose, the brake lamp 146 includes a light-emitting element (for example, a high intensity LED or an infrared LED) serving as a light-emitting device for application other than as a normal brake lamp, which enables binary data modulation via the intensity, color, illumination/extinguishment intervals, and so on of the illumination light. Note that a communication function required for binary data modulation and so on is provided in the control unit 142, for example, and more specifically, the technique disclosed in Japanese Patent Application Publication No. JP-A-11-53689 and so on is applied. Also note that the lamp control ECU 140 and the brake lamp 146 may correspond to the "other vehicle information output device" in the claims.

The system program 122a, input program 122b, route search/route guidance program 122c, various information acquisition program 122d, braking distance information generating program 122e, other vehicle braking information generating program 122f, and output program 122g, all of which are stored in the main memory 122, will now be described in outline.

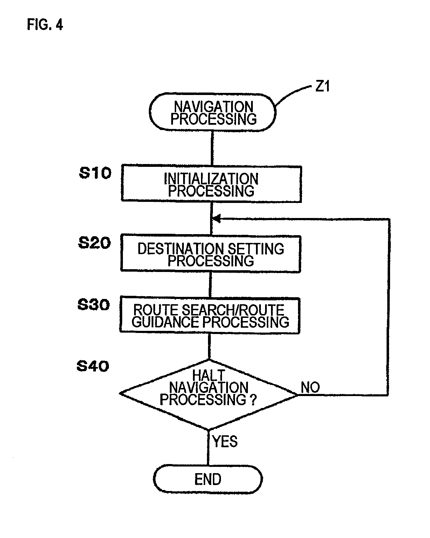

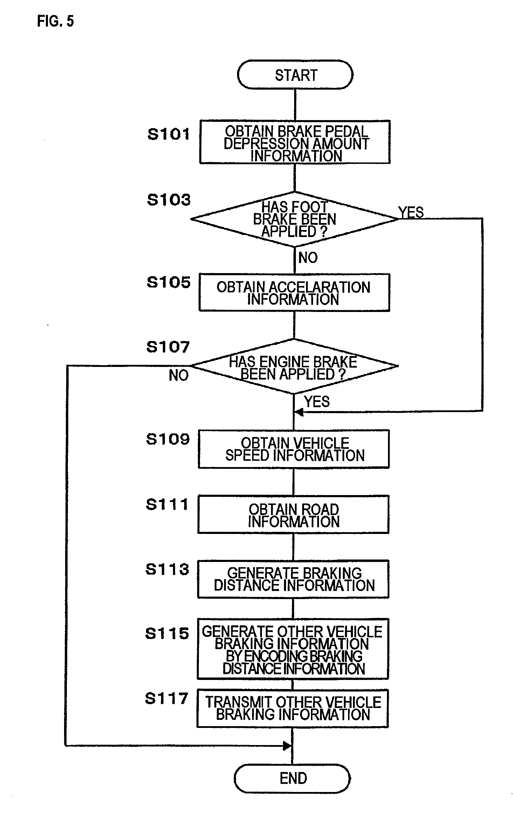

The system program 122a corresponds to a basic program for controlling each function performed from activation to shutdown of the navigation device 120, i.e. a navigation function (FIG. 4), an other vehicle braking information provision function (FIG. 5), and so on, and performing a series of memory management processes relating to data exchange between the various programs via the main memory 122 and so on.

The input program 122b has a function for causing the driver or passenger to input data relating to a destination for which the driver or passenger requires route guidance, a point of origin, and so on, as well as various other data required during use of the navigation function, via the input device 125, and transferring these data to another program, process, or the like. The input program 122b also has a function for transferring road information output by the road information database 123, current position information output by the GPS sensor 134, brake pressure information input from the brake assist ECU 110 via the communication control unit 135, and so on to another program, process, or the like.

The route search/route guidance program 122c manages the navigation function, or in other words the basic function of the navigation device 120, and serves to search for a recommended route or the like and provide the driver or passenger with guidance along the found route. More specifically, the route search/route guidance program 122c has a function for searching for a destination input through the input device 125 on the basis of the map data in the road information database 123, a function for searching for a route to the destination from a point of origin input through the input device 125 or the current location of the vehicle detected by the GPS sensor 134 on the basis of the road data in the road information database 123, and a function for outputting data relating to the found route (for example, an explanation of the advancement direction, such as right and left turns, road traffic information, and so on) via the display 126 and the sound source unit 128.

The various information acquisition program 122d has a function for acquiring various information from the peripheral devices of the CPU 121. More specifically, the various information acquisition program 122d acquires navigation-related setting information input from the input device 125, road information input from the road information database 123, current position information input from the GPS sensor 134, brake pressure information input from the brake assist ECU 110 via the communication control unit 135, vehicle speed information input from the sensor ECU, not shown in the drawing, and so on.

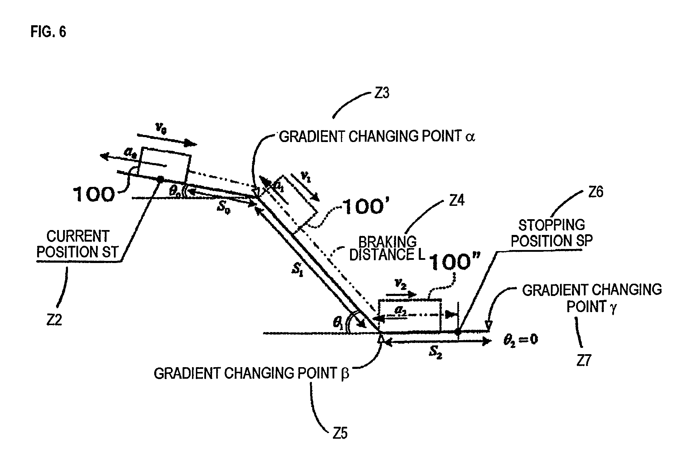

The braking distance information generating program 122e has a function for calculating the braking distance of the other vehicle 100 and generating braking distance information on the basis of current vehicle speed information relating to the other vehicle 100, obtained from the sensor ECU not shown in the drawing, current position information relating to the other vehicle 100, obtained from the GPS sensor 134, and road information relating to the road along which the other vehicle 100 is currently traveling, obtained from the road information database 123. Note that the braking distance information generating program 122e may correspond to an "other vehicle braking information generating device" in the claims. Braking distance calculation processing performed by the braking distance information generating program 122e will be described in detail below with reference to FIG. 6.

The other vehicle braking information generating program 122f has a function for generating the other vehicle braking information by encoding the braking distance information generated by the braking distance information generating program 122e, and thereby generates a data string that can be transmitted to the rear host vehicle 200 via the lamp control ECU 140. For example, a braking distance expressed in 0.1 meter units is converted into binary data, whereupon other vehicle braking information attached with an error-detectable check sum detection code, an error-correctable cyclic redundancy check code, and so on, is generated.

The output program 122g has a function for rendering various screen data on the display 126 in the form of diagrams and a function for causing the sound source unit 128 to output various guidance data through the speaker, or a function for outputting the other vehicle braking information generated by the other vehicle braking information generating program 122f to the lamp control ECU 140 via the communication control unit 135, and may correspond to the "other vehicle information outputting device" in the claims.

In relation to the navigation device 120 of the other vehicle 100, structured as described above, the navigation device 220 installed in the host vehicle 200 is structured as shown in FIG. 3. Note that the navigation device 220 is also based on a navigation function, similarly to the navigation device 120, and therefore has a substantially identical basic structure to the navigation device 120.

Accordingly, the navigation device 220 is also constituted mainly by a CPU 221, a main memory 222, a road information database 223, an input/output interface 224, an input device 225, a display 226, a sound source unit 228, a GPS sensor 234, a communication control unit 235, and so on. However, the navigation device 220 differs from the navigation device 120 in further including a millimeter wave radar 232 and a front camera 233 as peripheral devices of the CPU 221. Note that in FIG. 3, a brake assist ECU 210 and a sensor control ECU 240, which are connected to an in-vehicle LAN 290 via the communication control unit 235, are shown in addition to the navigation device 220.

The CPU 221, main memory 222, road information database 223, input/output interface 224, input device 225, display 226, GPS sensor 234, and communication control unit 235 are structured identically to the CPU 121, main memory 122, road information database 123, input/output interface 124, input device 125, display 126, GPS sensor 134, and communication control unit 135 of the navigation device 120, respectively, and therefore descriptions of specific structural examples thereof have been omitted.

The millimeter wave radar 232 and front camera 233 constitute the unique hardware of the navigation device 220 in the host vehicle 200. More specifically, the navigation device 220 needs to obtain information relating to the inter-vehicle distance between the host vehicle 200 and the other vehicle 100 traveling in front, as described with reference to FIG 1A, and therefore the millimeter wave radar 232 measures the distance to the other vehicle 100 and so on positioned in front of the host vehicle 200 (inter-vehicle distance information) from a time difference and phase difference based on a transmission wave and a reflection wave, and outputs the information to the CPU 221.

The front camera 233 captures a rear portion image including the brake lamp 146 of the other vehicle 100 traveling in front, demodulates binary data modulated through the intensity, color, illumination/extinguishment interval, and so on of the illumination light of the brake lamp 146, included in information relating to the captured image, and outputs these data to the CPU 221 as the other vehicle braking information. The image information is also output to the CPU 221. Note that the millimeter wave radar 232 may correspond to an "inter-vehicle distance information obtaining device" of the claims, and the front camera 233 may correspond to an "other vehicle braking information obtaining device" of the claims.

The brake assist ECU 210 and the sensor control ECU 240 are also connected to the navigation device 220 via the in-vehicle LAN 290. The brake assist ECU 220 is substantially identical to the brake assist ECU 110 of the other vehicle 100 in that it is mainly constituted by a control unit 212 and a communication control unit 214, and is capable of controlling a brake assist device 216 and an engine control device, not shown in the drawing, that are connected thereto. In the navigation device 220 installed in the host vehicle 200, by outputting host vehicle braking information generated through driving assistance processing to the brake assist ECU 210, forcible braking control can be performed when there is not enough time for the driver of the host vehicle 200 to perform a braking operation, as will be described below.

The sensor control ECU 240 is constituted mainly by a control unit 242 and a communication control unit 244, and is capable of controlling various sensors 246 (a vehicle speed sensor, a G sensor, and so on, for example) connected thereto. Note that in this embodiment, an example is described in which the millimeter wave radar 232 and front camera 233 are provided in the navigation device 220, but by replacing the sensors 246 of the sensor control ECU 240 with the millimeter wave radar and front camera, for example, the millimeter wave radar 232 and front camera 233 can be provided separately from the navigation device 220. In so doing, the need to provide the millimeter wave radar and so on in the main body of the navigation device 220 is eliminated, and hence various sensor devices, such as a millimeter wave radar and a front camera, can be attached respectively in appropriate positions.

An outline of the various programs stored in the main memory 222 of the navigation device 220 will now be described. Note that a system program 222a, an input program 222b, a route search/route guidance program 222c, a various information acquisition program 222d, and an output program 222g are structured substantially identically to the system program 122a, input program 122b, route search/route guidance program 122c, various information acquisition program 122d, and output program 122g of the navigation device 120, and hence description thereof has been omitted. Here, the unique software of the navigation device 220, namely a braking distance information acquisition program 222e and a stopping time calculation program 222f, will be described.

The braking distance information acquisition program 222e has a function for obtaining the binary data output by the front camera 233, or in other words the other vehicle braking information, via the input program 222b, and obtaining braking distance information, or in other words the braking distance of the other vehicle 100 traveling in front of the host vehicle 200, by decoding the other vehicle braking information. Note that the braking distance information acquisition program 222e may correspond to the "inter-vehicle distance information obtaining device" of the claims.

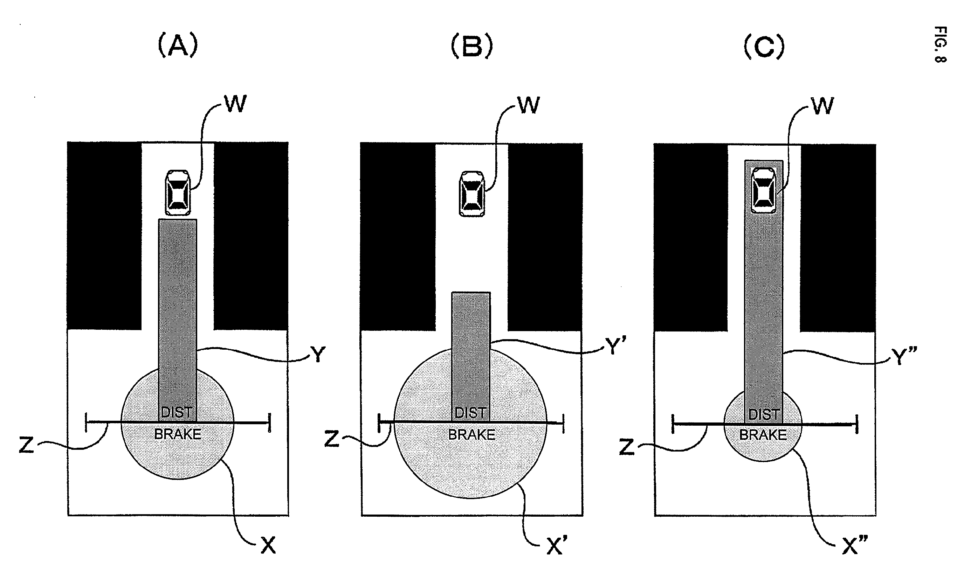

The stopping time calculation program 222f has a function for calculating a braking time of the host vehicle 200, or in other words the time required for the host vehicle 200 to come to a standstill from the start of a braking operation (to be referred to hereafter as the "stopping time") on the basis of vehicle speed information from the vehicle speed sensor in the sensor control ECU 240 and the inter-vehicle distance information from the millimeter wave radar 232, obtained via the various information acquisition program 222d, and the braking distance information of the other vehicle 100, obtained by the braking distance information acquisition program 222e. Note that the stopping time calculation program 222f may correspond to a "host vehicle braking information generating device" of the claims. Processing for calculating the stopping time will be described in detail below with reference to FIG. 8.

Next, the flow of navigation processing executed by the navigation device 120 and the navigation device 220 will be described on the basis of FIG. 4. Note that the processing content of the navigation processing is similar for the navigation device 120 installed in the other vehicle 100 and the navigation device 220 installed in the host vehicle 200, and therefore, the processing performed by the navigation device 120 will be described here as a representative example. Typically, the navigation device 120 is structured such that a main power source of the navigation device 120 is activated as the engine of the vehicle starts (the ignition switch turns ON), and therefore the navigation processing is set to be activated automatically by the system program 122a as soon as the main power source turns ON.

As shown in FIG. 4, first of all in the navigation processing, initialization processing, for example securing a predetermined work area in the main memory 122 or setting various flags and the like at their initial values, is performed in a step S10. Next, in a step S20, destination setting processing is performed. In this processing, destination data, preferred route data, and so on, which relate to route search conditions and the like such as the destination and points of passage, are input through the input device 125 by a driver operation, for example. Note that this processing is performed by the input program 122b.

Next, in a step S30, route search/route guidance processing is performed. This processing is performed by the route search/route guidance program 122c, and involves searching for a shortest route from the current position of the vehicle, obtained by the GPS sensor 134, to the destination set in the step S20, for example, using a search algorithm such as the Dijkstra method, on the basis of the map data and road data in the road information database 123. Information relating to the found route (for example, a description of the advancement direction, such as right and left turns) is then output as an image displayed on the display 126 and a synthesized voice or the like generated by the sound source unit 128. Thus, the driver or passenger can be provided with route guidance.

Once the route guidance of the step S30 is complete, processing is performed in a following step S40 to determine whether or not a request has been issued to halt the navigation processing. More specifically, when the vehicle reaches its destination, the driver usually parks the vehicle and alights, and at this time, the main power source of the navigation device 120 is cut as the engine is stopped. In the step S40, a determination is made on the basis of an engine stop signal (an ignition switch OFF signal) obtained directly before the main power source of the navigation device 120 is cut as to whether or not the vehicle has stopped, i.e. whether or not to halt the navigation processing.

When a request to halt the navigation processing has been issued (Yes in S40), data to be held in the non-volatile semiconductor storage device of a battery backed-up memory device or the like are stored. When a request to halt the navigation processing has not been issued (No in S40), the routine shifts to the processing of the step S20, where processing is performed to encourage the driver or the like to input destination information and so on.

Next, the flow of other vehicle braking information provision processing, executed by the navigation device 120 installed in the other vehicle 100, will be described on the basis of FIG. 5 and FIG. 6.

Note that this other vehicle braking information provision processing is executed by the system program 122a, input program 122b, various information acquisition program 122d, braking distance information generating program 122e, other vehicle braking information generating program 122f, and output program 122g in parallel with the navigation processing described above, and similarly to the navigation processing described above, is activated automatically by the system program 122a immediately after the navigation device 120 is activated. Upon completion, the series of processes is executed repeatedly from the beginning until an engine stop signal is input.

As shown in FIG. 5, first of all in the other vehicle braking information provision processing, processing is performed in a step S101 to obtain brake pedal depression amount information. More specifically, brake pressure information transmitted by the brake assist ECU 110 is obtained via the various information acquisition program 122d.

Next, in a step S103, processing is performed to determine whether or not a foot brake has been applied. More specifically, a determination is made on the basis of the brake pressure information obtained in the step S101 as to whether or not the foot brake has been applied by the driver of the other vehicle 100 by determining whether or not a brake pressure value exceeds a predetermined value. For example, when the brake pressure value exceeds the predetermined value, it is determined that the foot brake has been applied (Yes in S103), and when the brake pressure value does not exceed the predetermined value, it is determined that the foot brake has not been applied (No in S103).

When it is determined in the step S103 that the foot brake has been applied (Yes in S103), the processing advances to a step S109, and when it is determined that the foot brake has not been applied (No in S103), the processing advances to a following step S105, where processing is performed to obtain acceleration information.

In the step S105, for example, the acceleration information is obtained by implementing computation processing for time-differentiating the vehicle speed of vehicle speed information input by the sensor ECU, not shown in the drawing, via the various information acquisition program 122d, or the acceleration information is obtained by obtaining acceleration information output by the brake assist ECU 110 via the various information acquisition program 122d.

Next, in a step S107, processing is performed to determine whether or not an engine brake has been applied. This processing is performed on the basis of the acceleration information obtained in the step S105, and is performed by determining whether the acceleration sign is "positive (plus)" (acceleration) or "negative (minus)" (deceleration). When the acceleration sign is "negative (minus)" (deceleration), it is determined that the engine brake has been applied (Yes in S107), and when the acceleration sign is "positive (plus)" (acceleration), it is determined that the engine brake has not been applied (No in S107).

When it is determined in the step S107 that the engine brake has been applied (Yes in S107), processing is performed in a following step S109 to obtain vehicle speed information. When it is determined that the engine brake has not been applied (No in S107), this means that the other vehicle 100 is not in a braking state, and hence that there is no other vehicle braking information to provide to the outside. Accordingly, the series of other vehicle braking information provision processes is terminated. As noted above, this other vehicle braking information provision processing is executed repeatedly from the beginning until an engine stop signal is input.

In the step S109, processing is performed to obtain the vehicle speed information. In this processing, information relating to the current vehicle speed of the other vehicle 100 is obtained from the sensor ECU, not shown in the drawing, via the various information acquisition program 122d.

Next, in a step S111, processing is performed to obtain road information. In this processing, road data such as the gradient value of the road along which the other vehicle 100 is currently traveling is obtained from the road information stored in the road information database 123. For this purpose, first the current position information of the other vehicle 100 is obtained from the GPS sensor 134, whereupon road data (gradient value and so on) corresponding to longitude/latitude coordinate information based on the current position information are obtained from the road information database 123. Note that this information is obtained via the various information acquisition program 122d.

Once the current vehicle speed information of the other vehicle 100 and the gradient value and so on of the road along which the other vehicle 100 is traveling have been obtained, processing is performed in a following step S113 to generate braking distance information. This processing is performed by the braking distance information generating program 122e. Calculation of the braking distance can be understood more easily by referring to the illustrative diagram in FIG. 6, and hence description will be provided with reference to FIG. 6. FIG. 6 is an illustrative view showing a method of calculating the braking distance taking the gradient into account. In FIG. 6, the other vehicle 100 is currently positioned on a road having a gradient angle of $\theta_0$, and is traveling at a vehicle speed $v_0$ and an acceleration of $a_0$.

Assuming here that the current vehicle speed is $v_n$ and the acceleration is $a_n$, a braking distance S can typically be determined from the following Equation (1).

$$S = -v_n{}^2 / 2a_n \qquad (1)$$

When the braking distance S determined in Equation (1) is greater than a distance $S_n$ to the next gradient changing point (n-1), a vehicle speed $v_{n+1}$ and an acceleration $a_{n+1}$ immediately after the gradient changing point (n-1) are determined from the following Equations (2) and (3). Note that the vehicle speed $v_{n+1}$ and acceleration $a_{n+1}$ are determined through estimation calculation. Further, $\theta_n$ denotes the gradient angle at the next gradient changing point (n-1), $\theta_{n+1}$ denotes the gradient angle at the next gradient changing point n thereto, and g denotes gravitational acceleration.

$$v_{n+1} = \sqrt{2a_n S_n + v_n{}^2} \qquad (2)$$

$$a_{n+1} = a_n + g\sin(\theta_{n+1} - \theta_n) \qquad (3)$$

By inserting the vehicle speed $v_{n+1}$ and the acceleration $a_{n+1}$, determined in this manner, into Equation (1), the braking distance S immediately after the gradient changing point (n-1) is determined, and therefore, when the determined braking distance S is greater than a distance $S_{n+1}$ to the next gradient changing point n, the braking distance S is determined again using Equations (2) and (1). In other words, the braking distance S is determined continuously using Equations (2) and (1) until the determined braking distance S becomes smaller than the distance $S_{n+m}$ to the next gradient changing point n+m. By determining the sum total of the braking distance S determined in this manner using the following Equation (4), a braking distance L from a current position ST to a stopping position SP can be calculated, or in other words the braking distance information can be generated.

$$L = \sum_{n=0}^{m-1} S_n + S \qquad\qquad (4)$$

In the example shown in FIG. 6, for example, when the vehicle speed and acceleration of the other vehicle 100 at the current position ST are $v_0$ and $a_0$, respectively, and the braking distance S is determined using Equation (1), the braking distance S is greater than a distance $S_0$ from the current position ST to the next gradient changing point $\alpha$, and therefore a vehicle speed $v_1$ and an acceleration $a_1$ immediately after the gradient changing point $\alpha$ are determined using Equations (2) and (3). The braking distance S immediately after the gradient changing point $\alpha$ is then determined by inserting the determined vehicle speed $v_1$ and acceleration $a_1$ into Equation (1). As a result, the braking distance S is also greater than a distance $S_1$ immediately after the gradient changing point $\alpha$ to the next gradient changing point $\beta$, and hence the braking distance S immediately after the gradient changing point $\beta$ is determined in a similar manner. This braking distance S is smaller than a distance $S_2$ immediately after the gradient changing point $\beta$ to the next gradient changing point $\gamma$, and therefore the braking distance L from the current position ST to the stopping position SP is determined as $S_0 + S_1 + S$.

Once the braking distance has been determined in this manner in the step S 113, the routine returns to FIG. 5, and in a following step S 115, processing is performed to generate other vehicle braking information by encoding the braking distance information. This processing is performed by the other vehicle braking information generating program 122f, and involves converting the braking distance information generated in the step S113 into a binary data string that can be transmitted to the rear host vehicle 200 via the lamp control ECU 140, and then generating the other vehicle braking information by attaching an error-detectable check sum detection code, an error-correctable cyclic redundancy check code, and so on, for example.

In a step S117, processing is performed to transmit the other vehicle braking information. This processing is performed by having the output program 122g transmit the other vehicle braking information generated in the step S115 to the lamp control ECU 140 via the communication control unit 135. Once the processing of the step S117 is complete, the series of other vehicle braking information provision processes is terminated. As noted above, the other vehicle braking information provision processing is executed repeatedly from the start until an engine stop signal is input. As also noted above, the lamp control ECU 140, having received the other vehicle braking information, transmits the other vehicle braking information toward the rear host vehicle 200 through optical data transmission.

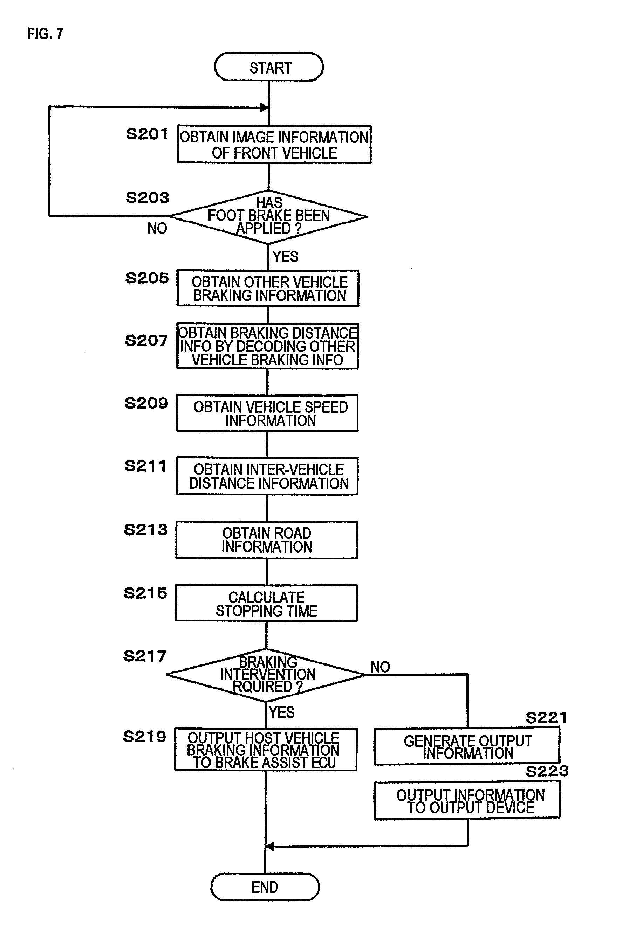

Next, the flow of driving assistance processing, which is executed by the navigation device 220 of the host vehicle 200 upon reception of the other vehicle braking information generated as described above and transmitted from the other vehicle 100, will be described on the basis of FIGS. 7 to 9.

The driving assistance processing is performed by the system program 222a, input program 222b, various information acquisition program 222d, braking distance information acquisition program 222e, stopping time calculation program 222f, and output program 222g in parallel with the navigation processing described above, and therefore, similarly to the other vehicle braking information provision processing performed by the navigation device 120, the processing is activated automatically by the system program 222a immediately after activation of the navigation device 220, and when the series of processes is complete, the processing is executed again from the start.

As shown in FIG. 7, first of all in the driving assistance processing, processing is performed to obtain image information relating to the other vehicle 100 traveling in front in a step S201. More specifically, image information of the rear of the other vehicle 100, which is output by the front camera 233, is obtained via the various information acquisition program 122d.

Next, in a step S203, processing is performed to determine whether or not the foot brake has been applied. More specifically, image analysis is performed on the basis of the image information obtained in the step S201, and a determination is made as to whether or not the brake lamp 146 of the other vehicle 100 is illuminated. When the brake lamp 146 is illuminated, it is determined that the foot brake has been applied (Yes in S203), and the routine advances to the processing of a following step S205. When the brake lamp 146 is not illuminated, it is determined that the foot brake has not been applied (No in S203), and the routine returns to the step S201 and obtains new image information. In other words, the processing of the steps S201 and S203 is repeated until the foot brake is applied.

In the step S205, processing is performed to obtain the other vehicle braking information. More specifically, the other vehicle braking information of the navigation device 120, which is output by the front camera 233, is obtained via the various information acquisition program 222d.

Next, in a step S207, processing is performed to obtain the braking distance information by decoding the other vehicle braking information obtained in the step S205. This processing is performed by the braking distance information acquisition program 222e, and involves an error detection calculation and an error correction calculation based on the check sum detection code, cyclic redundancy check code, and so on that are attached in the other vehicle braking information provision processing performed by the navigation device 120. Unless a data error is detected or an uncorrectable data error exists, the data are used as the braking distance information.

In a following step S209, processing is performed to obtain the vehicle speed information. In this processing, information relating to the current speed of the host vehicle 200 is obtained from the sensor control ECU 240 via the various information acquisition program 222d.

In a step S211, processing is performed to obtain the inter-vehicle distance information. More specifically, the inter-vehicle distance information output by the millimeter wave radar 232 is obtained via the various information acquisition program 222d.

Next, in a step S213, processing is performed to obtain the road information. In this processing, road data such as the gradient value of the road along which the host vehicle 200 is currently traveling are obtained from the road information stored in the road information database 223. For this purpose, first the current position information of the host vehicle 200 is obtained from the GPS sensor 234, whereupon road data (the gradient value and so on) corresponding to longitude/latitude coordinate information based on the current position information are obtained from the road information database 223. Note that this information is obtained via the various information acquisition program 222d.

When the braking distance information of the other vehicle 100, the inter-vehicle distance information relating to the other vehicle 100, the current speed information of the host vehicle 200, and the gradient value and so on of the road along which the host vehicle 200 is traveling have been obtained in this manner, processing is performed in a following step S215 to calculate a deceleration G/stopping time. This processing is performed by the stopping time calculation program 222f, and since these calculations can be understood more easily with reference to FIG 6, FIG 6 will be referred to as the calculations are described. Note that parameter definitions and the like are similar to those described in relation to the other vehicle braking information provision processing of the navigation device 120.

First, the acceleration $a_0$ (deceleration rate) is determined from an arbitrary deceleration G, which may vary according to differences in the brake device of the host vehicle 200 or the braking characteristic of the driver, using the following Equation (5). In Equation (5), g denotes gravitational acceleration. Note that the arbitrary deceleration G is set at "0.5G" in the case of a comparatively strong braking characteristic and at "0.3G" in the case of a comparatively weak braking characteristic, for example. In the case of an average braking characteristic corresponding substantially to the center of the aforementioned values, the arbitrary deceleration G is set at "0.4G".

$$a_0 = G \times g \qquad\qquad (5)$$

Next, by setting the acceleration $a_0$ determined in Equation (5) as $a_n$ and inserting the current vehicle speed of the host vehicle 200 into the aforementioned Equation (1) as $v_n$, the braking distance S is determined. As above, a determination is then made as to whether or not the braking distance S is greater than the distance $S_n$ to the next gradient changing point (n-1), and the braking distance S is determined continuously using Equations (2) and (1) until the determined braking distance S is smaller than the distance $S_{n+m}$ to the next gradient changing point n+m.

In parallel with this processing, a time $t_n$ required to travel between each gradient changing point is determined using the following Equation (6), and by determining the sum total of this time using the following Equation (7), a time T required for braking from the current position ST to the stopping position SP can be calculated.

$$t_n = (v_{n+1} - v_n)/a_n \qquad\qquad (6)$$

$$T = \sum_{n=0}^{m-1} t_n - v_m/a_m \qquad\qquad (7)$$

(where, if m=0, $-v_m/a_m$)

For example, in the example shown in FIG. 6, when the vehicle speed of the host vehicle 200 in the current position ST is $v_0$ and the acceleration is $a_0$ (calculated using Equation (5)), the time (in second units) required to travel a distance $S_0$ from the current position ST to the first gradient changing point $\alpha$ is determined from the above Equation (6) using the following Equation (8). Similarly, the time (in second units) required to travel from the gradient changing point $\alpha$ to the next gradient changing point $\beta$ is determined using the following Equation (9).

$$t_1 = (v_2 - v_1)/a_1 \qquad\qquad (8)$$

$$t_0 = (v_1 - v_0)/a_0 \qquad\qquad (9)$$

In this example, the host vehicle 200 stops before reaching the next gradient changing point γ, and therefore the time required for the host vehicle 200 to travel the braking distance L, or in other words the time T required from the start of braking to stopping, is determined using the following Equation (10).

$$T = \sum_{n=0}^{1} t_n - v_2/a_2 = t_0 + t_1 - v_2/a_2 \qquad\qquad (10)$$

Once the stopping time T has been calculated in the step S215 in this manner, processing is performed to determine whether or not braking intervention is required in a following step S217. More specifically, when the stopping time calculated in the step S215, or in other words the length of time required for the host vehicle 200 to stop from the start of braking, is equal to or greater than a predetermined time (four seconds, for example) (No in S217), either the display 226 or the sound source unit 228 is selected as an output destination for the host vehicle braking information, and when the stopping time is less than the predetermined time (four seconds, for example) (Yes in S217), the brake assist ECU 210 is selected as the output destination for the host vehicle braking information.

A step S219 involves processing that is selected when the comparative degree of urgency is high and there is not enough time for the driver of the host vehicle 200 to perform a braking operation. In this processing, the various information (inter-vehicle distance information, current vehicle speed information, and the stopping time) obtained through the previous processing is output to the brake assist ECU 210 as the host vehicle braking information. This processing is performed by the output program 222g, and involves transmitting the host vehicle braking information to the brake assist ECU 210 via the communication control unit 235.

Thus, upon reception of the host vehicle braking information, the brake pressure required to generate a sufficient braking force to stop the host vehicle 200 is generated by the brake assist ECU 210 on the basis of the host vehicle braking information, and as a result, forcible braking control can be performed when there is not enough time for the driver of the host vehicle 200 to perform a braking operation.

A step S221 involves processing that is selected when the comparative degree of urgency is low and there is enough time for the driver of the host vehicle 200 to perform a braking operation. In this processing, output information (notification information) based on the various information (inter-vehicle distance information, current vehicle speed information, and the stopping time) obtained through the previous processing is generated using the various information as the host vehicle braking information.

For example, when the display 226 has been selected in advance as the output device, braking distance information centering on information regarding a recommended brake pressure and information regarding a corresponding braking distance is generated for a case in which the brake pressure is greater or smaller. On the other hand, when the sound source unit 228 is selected in advance as the output device, voice information capable of expressing the brake pedal pressure in phrases such as "strong", "normal", and "weak", or voice information capable of expressing the brake pedal depression amount in phrases such as "deep", "normal", and "slight", is generated as the information relating to the recommended brake pressure. Note that this processing is performed by the output program 222g.

Next, in a step S223, processing is performed to output the output information generated in the step S221 to the pre-selected output device (the display 226 or the sound source unit 228). As shown in FIG. 8A, for example, when the display 226 has been selected, a circle display X capable of expressing the information regarding the recommended brake pressure by the size of its diameter and a rod-shaped display Y capable of expressing the corresponding braking distance information by its length are displayed. A gauge Z clarifying the diameter of the circle display X is displayed in relation to the brake pressure indicated by the circle display X, and a vehicle display W clarifying the position of the other vehicle 100 traveling in front is displayed in relation to the braking distance indicated by the rod-shaped display Y

The recommendation screen display shown in FIG. 8A is output to the display 226 initially, and when the driver of the host vehicle 200 operates the brake pedal, a screen display which changes according to the brake pedal depression amount is displayed (FIGS. 8B and 8C). As shown in FIG. 8B, for example, on this screen, when the brake pedal depression amount is large, the diameter of a circle display X' increases and the length of a rod-shaped display Y' indicating the braking distance decreases. On the other hand, as shown in FIG. 8B, when the brake pedal depression amount is small, the diameter of a circle display X" decreases and the length of a rod-shaped display Y" indicating the braking distance increases.

As described above, according to the driving support system of this embodiment, other vehicle braking information relating to a braking operation of the other vehicle 100 is generated by the braking distance information generating program 122e and other vehicle braking information generating program 122f in the navigation device 120 of the other vehicle 100 (S 113, S 115), and this information is output to the lamp control ECU 140 by the output program 122g (S 117), whereupon optical data are transmitted to the exterior of the other vehicle 100 through the brake lamp 146. The other vehicle braking information output by the navigation device 120 of the other vehicle 100 is obtained by the various information acquisition program 222d of the navigation device 220 in the host vehicle 200 (S205), and on the basis thereof, host vehicle braking information relating to a braking operation of the host vehicle 200 is generated by the braking distance information acquisition program 222e and the stopping time calculation program 222f (S207, S215), whereupon the host vehicle braking information is output to the display 226, the sound source unit 228, or the brake assist ECU 210 by the output program 222g (S219, S223). Thus, in comparison with a case in which host vehicle braking information is generated on the basis of nothing more than detection information obtained from a detection device such as a radar device or a vehicle speed sensor, for example, host vehicle braking information relating to the braking operation of the host vehicle 200 is generated on the basis of the other vehicle braking information in addition to the vehicle speed information of the other vehicle 100 and inter-vehicle distance information, and therefore more accurate braking information can be generated. In other words, the future behavior of the other vehicle 100 can be predicted to a certain extent on the basis of the other vehicle braking information relating to the braking operation of the other vehicle 100, and therefore the host vehicle braking information can be generated taking the predictable future behavior of the other vehicle 100 into account. Hence, appropriate driving support can be provided by the brake assist ECU 210, display 226, and so on, which serve as a predetermined output destination of the system, on the basis of the host vehicle braking information.

Further, according to the driving support program of this embodiment, the braking distance information generating program 122e, the other vehicle braking information generating program 122f, and the output program 122g cause the other vehicle 100 side navigation device 120, which serves as a computer constituted mainly by the CPU 121 and the main memory 122, to function so as to be capable of generating other vehicle braking information relating to a braking operation of the other vehicle 100 (S113, S115), outputting this information to the lamp control ECU 140 via the output program 122g (S117), and transmitting optical data generated by the brake lamp 146 to the exterior of the other vehicle 100. Further, the various information acquisition program 222d, braking distance information acquisition program 222e, stopping time calculation program 222f, and output program 222g cause the host vehicle 200 side navigation device 220, which serves as a computer constituted mainly by the CPU 221 and the main memory 222, to function so as to be capable of obtaining the other vehicle braking information output by the navigation device 120 of the other vehicle 100 (S205), generating host vehicle braking information relating to a braking operation of the host vehicle 200 on the basis of this information (S207, S215), and outputting the host vehicle braking information to the display 226, the sound source unit 228, or the brake assist ECU 210 (S219, S223). Thus, in the navigation device 220, the host vehicle braking information relating to the braking operation of the host vehicle 200 is generated on the basis of the other vehicle braking information relating to the braking operation of the other vehicle 100, in addition to the vehicle speed information of the other vehicle 100 and the inter-vehicle distance information, and therefore, similarly to the driving support system, appropriate driving support can be provided by the brake assist ECU 210, display 226, and so on, which serve as a predetermined output destination of the navigation device 220, on the basis of the host vehicle braking information.

Note that in the embodiment described above, optical data transmission performed by the lamp control ECU 140 and the brake lamp 146 is applied as a device (other vehicle information outputting device) for transmitting the other vehicle braking information from the navigation device 120 (first in-vehicle device) to the navigation device 220 (driving support device, second in-vehicle device), but the present invention is not limited thereto, and any wireless transmission medium that is capable of transmitting binary data, for example wireless data transmission through microwaves or millimeter waves, or sound wave data transmission in a non-audible high frequency or low frequency, may be employed.

According to a driving support system of the present invention, other vehicle braking information relating to a braking operation of an other vehicle is generated by a navigation device of the other vehicle, and this information is output to a lamp control ECU, whereupon optical data generated by a brake lamp are transmitted to the exterior of the other vehicle. In a host vehicle, the other vehicle braking information output by the navigation device of the other vehicle is obtained, and on the basis thereof, host vehicle braking information relating to a braking operation of the host vehicle is generated and output to a display or a brake assist ECU. Thus, the future behavior of the other vehicle can be predicted to a certain extent on the basis of the other vehicle braking information relating to the braking operation of the other vehicle, and therefore the host vehicle braking information can be generated taking the predictable future behavior of the other vehicle into account. Hence, appropriate driving support can be provided.

LIST OF REFERENCE NUMBERS

**[0096]**

FIG. 2

| | |
|---|---|
| 116 | BRAKE ASSIST DEVICE |
| 112 | CONTROL UNIT |
| 114 | COMMUNICATION CONTROL UNIT |
| 146 | BRAKE LAMP |
| 142 | CONTROL UNIT |
| 144 | COMMUNICATION CONTROL UNIT |
| 134 | GPS SENSOR |
| 135 | COMMUNICATION CONTROL UNIT |
| 124 | I/O INTERFACE |
| 122 | MAIN MEMORY |
| 122a | SYSTEM PROGRAM |
| 122b | INPUT PROGRAM |
| 122c | ROUTE SEARCH/ROUTE GUIDANCE PROGRAM |
| 122d | VARIOUS INFORMATION ACQUISITION PROGRAM |
| 122e | BRAKING DISTANCE INFORMATION GENERATING PROGRAM |
| 122f | OTHER VEHICLE BRAKING INFORMATION GENERATING PROGRAM |
| 122g | OUTPUT PROGRAM |
| 123 | ROAD INFORMATION DATABASE |

FIG 3

| | |
|---|---|
| 216 | BRAKE ASSIST DEVICE |
| 212 | CONTROL UNIT |
| 214 | COMMUNICATION CONTROL UNIT |
| 246 | SENSOR |
| 242 | CONTROL UNIT |
| 244 | COMMUNICATION CONTROL UNIT |
| 232 | MILLIMETER WAVE RADAR |
| 233 | FRONT CAMERA |
| 234 | GPS SENSOR |
| 235 | COMMUNICATION CONTROL UNIT |
| 224 | I/O INTERFACE |
| 222 | MAIN MEMORY |
| 222a | SYSTEM PROGRAM |
| 222b | INPUT PROGRAM |
| 222c | ROUTE SEARCH/ROUTE GUIDANCE PROGRAM |
| 222d | VARIOUS INFORMATION ACQUISITION PROGRAM |
| 222e | BRAKING DISTANCE INFORMATION ACQUISITION PROGRAM |
| 222f | STOPPING TIME CALCULATION PROGRAM |
| 222g | OUTPUT PROGRAM |
| 223 | ROAD INFORMATION DATABASE |

FIG 4

| | |
|---|---|
| Z1 | NAVIGATION PROCESSING |
| S10 | INITIALIZATION PROCESSING |
| S20 | DESTINATION SETTING PROCESSING |
| S30 | ROUTE SEARCH/ROUTE GUIDANCE PROCESSING |
| S40 | HALT NAVIGATION PROCESSING? |

FIG. 5

S101   OBTAIN BRAKE PEDAL DEPRESSION AMOUNT INFORMATION
S103   HAS FOOT BRAKE BEEN APPLIED?
S105   OBTAIN ACCELERATION INFORMATION
S107   HAS ENGINE BRAKE BEEN APPLIED?
S109   OBTAIN VEHICLE SPEED INFORMATION
S111   OBTAIN ROAD INFORMATION
S113   GENERATE BRAKING DISTANCE INFORMATION
S115   GENERATE OTHER VEHICLE BRAKING INFORMATION BY ENCODING BRAKING DISTANCE INFORMATION
S117   TRANSMIT OTHER VEHICLE BRAKING INFORMATION

FIG. 6

Z2   CURRENT POSITION ST
Z3   GRADIENT CHANGING POINT $\alpha$
Z4   BRAKING DISTANCE L
Z5   GRADIENT CHANGING POINT $\beta$
Z6   STOPPING POSITION SP
Z7   GRADIENT CHANGING POINT $\gamma$

FIG. 7

S201   OBTAIN IMAGE INFORMATION OF FRONT VEHICLE
S203   HAS FOOT BRAKE BEEN APPLIED?
S205   OBTAIN OTHER VEHICLE BRAKING INFORMATION
S207   OBTAIN BRAKING DISTANCE INFORMATION BY DECODING OTHER VEHICLE BRAKING INFORMATION
S209   OBTAIN VEHICLE SPEED INFORMATION
S211   OBTAIN INTER-VEHICLE DISTANCE INFORMATION
S213   OBTAIN ROAD INFORMATION
S215   CALCULATE STOPPING TIME
S217   BRAKING INTERVENTION REQUIRED?
S219   OUTPUT HOST VEHICLE BRAKING INFORMATION TO BRAKE ASSIST ECU
S221   GENERATE OUTPUT INFORMATION
S223   OUTPUT OUTPUT INFORMATION TO OUTPUT DEVICE

**Claims**

1. A driving support device comprising:

   an other vehicle braking information obtaining device (221, 222, 233) for obtaining, from another vehicle traveling in front of a host vehicle, other vehicle braking information relating to a braking operation of the other vehicle;
   a vehicle speed information obtaining device (221, 222, 222d) for obtaining current vehicle speed information relating to the host vehicle;
   an inter-vehicle distance information obtaining device (221, 222, 222e, 232) for obtaining inter-vehicle distance information relating to a distance between the other vehicle and the host vehicle;
   a host vehicle braking information generating device (221, 222, 222f) for generating host vehicle braking information relating to a braking operation of the host vehicle on the basis of the other vehicle braking information, the vehicle speed information, and the inter-vehicle distance information; and
   an output control device (221, 222, 222g) for outputting the host vehicle braking information to a predetermined output destination.

2. The driving support device according to claim 1, wherein the predetermined output destination is a braking device (210) capable of stopping the host vehicle on the basis of the host vehicle braking information.

3. The driving support device according to claim 1, wherein the predetermined output destination is a notifying device (226, 228) capable of generating and outputting notification information enabling a driver of the host vehicle to recognize the need to perform a braking operation, on the basis of the host vehicle braking information.

4. The driving support device according to claim 1, wherein the predetermined output destination is a braking device (210) capable of stopping the host vehicle on the basis of the host vehicle braking information, and a notifying device (226, 228) capable of generating and outputting notification information enabling a driver of the host vehicle to recognize the need to perform a braking operation, on the basis of the host vehicle braking information, and the output control device (221, 222, 222g) selects the output destination from among the braking device (210) and the notifying device (226, 228) on the basis of information included in the host vehicle braking information, constituted by deceleration rate information regarding a rate at which the host vehicle decelerates, and stopping time information regarding a time required for the host vehicle to stop traveling from the beginning of the braking operation of the host vehicle.

5. The driving support device according to claim 3 or claim 4, wherein the notifying device (226, 228) notifies the driver of at least one of information regarding an appropriate braking amount for stopping the host vehicle without contacting the other vehicle, and information regarding a braking distance of the host vehicle when the appropriate braking amount is applied, which serve as the notification information.

6. A driving support system for supporting the driving of a host vehicle on the basis of information relating to another vehicle traveling in front of the host vehicle, comprising:

a first in-vehicle device (120) installed in the other vehicle, comprising an other vehicle braking information generating device (121, 122, 122e, 122f) for generating other vehicle braking information relating to a braking operation of the other vehicle, and an other vehicle information outputting device (114, 121, 122, 122g, 135, 140, 146) for outputting the other vehicle braking information to the exterior of the other vehicle; and
a second in-vehicle device (220) installed in the host vehicle, comprising an other vehicle braking information obtaining device (222d) for obtaining the other vehicle braking information output by the other vehicle information outputting device of the first in-vehicle device, a vehicle speed information obtaining device (221, 222, 222d) for obtaining current vehicle speed information relating to the host vehicle, an inter-vehicle distance information obtaining device (221, 222, 222e, 232) for obtaining inter-vehicle distance information relating to a distance between the other vehicle and the host vehicle, a host vehicle braking information generating device (221, 222, 222f) for generating host vehicle braking information relating to a braking operation of the host vehicle on the basis of the other vehicle braking information, the vehicle speed information, and the inter-vehicle distance information, and an output control device (221, 222, 222g) for outputting the host vehicle braking information to a predetermined output destination.

7. A driving support program comprising a program for causing a computer to function as:

an other vehicle braking information obtaining device (221, 222, 233) for obtaining, from another vehicle traveling in front of a host vehicle in which the computer is installed, other vehicle braking information relating to a braking operation of the other vehicle;
a vehicle speed information obtaining device (221, 222, 222d) for obtaining current vehicle speed information relating to the host vehicle;
an inter-vehicle distance information obtaining device (221, 222, 222e, 232) for obtaining inter-vehicle distance information relating to a distance between the other vehicle and the host vehicle;
a host vehicle braking information generating device (221, 222, 222f) for generating host vehicle braking information relating to a braking operation of the host vehicle on the basis of the other vehicle braking information, the vehicle speed information, and the inter-vehicle distance information; and
an output control device (221, 222, 222g) for outputting the host vehicle braking information to a predetermined output destination.

FIG. 1

FIG. 2

~100

BRAKE ASSIST
DEVICE ~116

BRAKE LAMP ~146

110

CONTROL UNIT ~112

COMMUNICATION
CONTROL UNIT ~114

140

CONTROL UNIT ~142

COMMUNICATION
CONTROL UNIT ~144

190

120

126
125
128
124

GPS
SENSOR 134

COMMUNICATION
CONTROL UNIT 135

I/O INTERFACE

121

CPU

123

ROAD
INFORMATION
DATA BASE

129

MAIN MEMORY ~122

SYSTEM PROGRAM ~122a

INPUT PROGRAM ~122b

ROUTE SEARCH/
ROUTE GUIDANCE
PROGRAM ~122c

VARIOUS INFO
ACQUISITION PROG. ~122d

BRAKING DISTANCE
INFO GENERATING
PROGRAM ~122e

OTHER VEHICLE
BRAKING INFO
GENERATING PROG. ~122f

OUTPUT PROGRAM ~122g

FIG.3

200

| BRAKE ASSIST DEVICE | ~216 |

| SENSOR | ~246 |

210

240

| CONTROL UNIT | ~212 |

| CONTROL UNIT | ~242 |

| COMMUNICATION CONTROL UNIT | ~214 |

| COMMUNICATION CONTROL UNIT | ~244 |

290

220

226
225
228
224

232 233 234 235

| MM WAVE RADAR | FRONT CAMERA | GPS SENSOR | COMMUNIC. CONTROL UNIT |

| I/O INTERFACE |

221

| CPU |

MAIN MEMORY 222

| SYSTEM PROGRAM | 222a |
| INPUT PROGRAM | 222b |
| ROUTE SEARCH/ ROUTE GUIDANCE PROGRAM | 222c |
| VARIOUS INFO ACQUISITION PROG. | 222d |
| BRAKING DISTANCE INFO ACQUISITION PROGRAM | 222e |
| STOPPING TIME CALCULATION PROGRAM | 222f |
| OUTPUT PROGRAM | 222g |

223

| ROAD INFORMATION DATA BASE |

229

FIG. 4

```
                    ┌─────────────────┐      ╱ Z1
                    │   NAVIGATION    │
                    │   PROCESSING    │
                    └────────┬────────┘
                             │
   ┌──────┐       ┌─────────────────────┐
   │ S10  │       │   INITIALIZATION    │
   └──────┘       │     PROCESSING      │
                  └──────────┬──────────┘
                             │◄──────────────────────┐
   ┌──────┐       ┌─────────────────────┐            │
   │ S20  │       │ DESTINATION SETTING │            │
   └──────┘       │     PROCESSING      │            │
                  └──────────┬──────────┘            │
   ┌──────┐       ┌─────────────────────┐            │
   │ S30  │       │  ROUTE SEARCH/ROUTE │            │
   └──────┘       │ GUIDANCE PROCESSING │            │
                  └──────────┬──────────┘            │
                             │                       │
   ┌──────┐          ╱───────────────╲               │
   │ S40  │         ╱      HALT        ╲      NO      │
   └──────┘        ╱   NAVIGATION       ╲─────────────┘
                   ╲   PROCESSING ?     ╱
                    ╲─────────┬────────╱
                              │ YES
                    ┌─────────────────┐
                    │       END       │
                    └─────────────────┘
```

**FIG. 5**

START

S101 — OBTAIN BRAKE PEDAL DEPRESSION AMOUNT INFORMATION

S103 — HAS FOOT BRAKE BEEN APPLIED ? — YES / NO

S105 — OBTAIN ACCELARATION INFORMATION

S107 — HAS ENGINE BRAKE BEEN APPLIED ? — NO / YES

S109 — OBTAIN VEHICLE SPEED INFORMATION

S111 — OBTAIN ROAD INFORMATION

S113 — GENERATE BRAKING DISTANCE INFORMATION

S115 — GENERATE OTHER VEHICLE BRAKING INFORMATION BY ENCODING BRAKING DISTANCE INFORMATION

S117 — TRANSMIT OTHER VEHICLE BRAKING INFORMATION

END

FIG. 6

FIG. 7

```
                    ( START )
                        │
                        ▼
S201   ┌──────────────────────────────┐
       │  OBTAIN IMAGE INFORMATION    │
       │     OF FRONT VEHICLE         │
       └──────────────────────────────┘
                        │
S203              ◇ HAS         ◇
              FOOT BRAKE BEEN
    NO          APPLIED ?
                        │ YES
                        ▼
S205   ┌──────────────────────────────┐
       │   OBTAIN OTHER VEHICLE       │
       │   BRAKING INFORMATION        │
       └──────────────────────────────┘
                        │
S207   ┌──────────────────────────────┐
       │ OBTAIN BRAKING DISTANCE      │
       │ INFO BY DECODING OTHER       │
       │ VEHICLE BRAKING INFO         │
       └──────────────────────────────┘
                        │
S209   ┌──────────────────────────────┐
       │   OBTAIN VEHICLE SPEED       │
       │      INFORMATION             │
       └──────────────────────────────┘
                        │
S211   ┌──────────────────────────────┐
       │   OBTAIN INTER-VEHICLE       │
       │   DISTANCE INFORMATION       │
       └──────────────────────────────┘
                        │
S213   ┌──────────────────────────────┐
       │      OBTAIN ROAD             │
       │      INFORMATION             │
       └──────────────────────────────┘
                        │
S215   ┌──────────────────────────────┐
       │      CALCULATE               │
       │      STOPPING TIME           │
       └──────────────────────────────┘
                        │
S217          ◇  BRAKING       ◇    NO
              INTERVENTION    ──────────┐
                RQUIRED ?                │
                        │ YES           │
S219   ┌──────────────────────┐   S221 ┌──────────────────────┐
       │ OUTPUT HOST VEHICLE  │        │  GENERATE OUTPUT     │
       │ BRAKING INFORMATION  │        │    INFORMATION       │
       │ TO BRAKE ASSIST ECU  │        └──────────────────────┘
       └──────────────────────┘   S223 ┌──────────────────────┐
                        │               │ OUTPUT INFORMATION   │
                        │               │  TO OUTPUT DEVICE    │
                        │               └──────────────────────┘
                        │◄──────────────────────┘
                        ▼
                    ( END )
```

23

FIG. 8

EP 1 804 227 A2

(A)

(B)

(C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003104184 A
- JP 11053689 A